(19) Europäisches Patentamt
European Patent Office
Office européen des brevets

(11) **EP 4 279 296 B1**

(12) **EUROPEAN PATENT SPECIFICATION**

(45) Date of publication and mention
of the grant of the patent:
**04.02.2026 Bulletin 2026/06**

(21) Application number: **23168441.6**

(22) Date of filing: **18.04.2023**

(51) International Patent Classification (IPC):
**B60C 11/03** (2006.01)    **B60C 11/12** (2006.01)
**B60C 11/13** (2006.01)    **C08L 7/00** (2006.01)
**B60C 11/00** (2006.01)

(52) Cooperative Patent Classification (CPC):
(C-Sets available)
**C08L 7/00; B60C 11/0323; B60C 11/1281;
B60C 11/13;** B60C 2011/0016          (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.05.2022 JP 2022081566**

(43) Date of publication of application:
**22.11.2023 Bulletin 2023/47**

(73) Proprietor: **Sumitomo Rubber Industries, Ltd.
Kobe-shi, Hyogo 651-0072 (JP)**

(72) Inventor: **HIMEDA, Shingo
Chuo-ku, Kobe-shi, 651-0072 (JP)**

(74) Representative: **TBK
Bavariaring 4-6
80336 München (DE)**

(56) References cited:
**EP-A1- 3 738 998          EP-A1- 3 795 378
JP-A- 2018 150 420**

(52) Cooperative Patent Classification (CPC): (Cont.)

C-Sets
**C08L 7/00, C08L 9/06, C08L 9/00, C08L 91/08,
C08K 3/04, C08K 3/36, C08K 5/548, C08K 5/18,
C08K 5/09, C08K 3/22, C08K 3/06, C08K 5/47**

## Description

TECHNICAL FIELD

The present invention relates to a tire.

BACKGROUND ART

Tires require a variety of properties. In particular, for heavy duty vehicles such as trucks and buses, it has been desirable to improve chip and cut resistance.

EP 3 738 998 A1 discloses a tread rubber composition and a tire, the tread rubber composition containing a rubber component including an isoprene-based rubber, a butadiene rubber, and a styrene-butadiene rubber, and a carbon black having an average particle diameter not greater than 20 nm and/or a cetyltrimethylammonium bromide adsorption specific surface area not less than 130 m$^2$/g, an amount of the isoprene-based rubber in 100% by mass of the rubber component is not less than 56% by mass, and the rubber composition satisfies hardness (Hs) $\geq$ 72 and elongation at break (EB) $\geq$ 420%.

EP 3 795 378 A1 discloses a heavy duty tire comprising a tread composed of a rubber composition comprising 20 parts by mass or more of silica having 175 m$^2$/g or more of a nitrogen adsorption specific surface area (N$_2$SA) and 4.0 parts or more of an adhesive resin based on 100 parts by mass of a rubber component, wherein the rubber composition comprises at least one of an isoprene-based rubber, a styrene-butadiene rubber, and a butadiene rubber, and the tread has 3.0% or more of difference between a ratio S1 of a circumferential groove are to contact area and a ratio S2 of a transverse groove area to the contact area.

SUMMARY OF INVENTION

TECHNICAL PROBLEM

The present invention aims to solve the above problem and provide a tire with excellent chip and cut resistance.

SOLUTION TO PROBLEM

The present invention relates a tire, including a tread, the tread containing: at least one rubber component including at least one isoprene-based rubber and at least one styrene-butadiene rubber; and at least one filler including at least one carbon black, the tire satisfying the following relationships (1) to (3):

(1) Isoprene-based rubber content > 65% by mass;
(2) 1.0% by mass $\leq$ Total styrene content $\leq$ 8.0% by mass; and
(3) Filler content > Total styrene content

wherein Isoprene-based rubber content and Total styrene content represent an amount (% by mass) of the isoprene-based rubber and a total styrene content (% by mass), respectively, based on 100% by mass of the rubber component, and Filler content represents an amount (parts by mass) of the filler per 100 parts by mass of the rubber component; and
wherein the tire has a groove including an outer part on a tread face side and an inner part that is located inward from the outer part with respect to a radial direction of the tire and has a larger groove width than the outer part.

ADVANTAGEOUS EFFECTS OF INVENTION

The tire of the present invention includes a tread containing a rubber component including an isoprene-based rubber and a styrene-butadiene rubber, and a filler including a carbon black, and further satisfies relationships (1) to (3) with respect to the amount (% by mass) of isoprene-based rubbers and the total styrene content (% by mass) each based on 100% by mass of the rubber components, and the amount (parts by mass) of fillers per 100 parts by mass of the rubber components. And the tire has a groove including an outer part on a tread face side and an inner part that is located inward from the outer part with respect to a radial direction of the tire and has a larger groove width than the outer part. Thus, it is possible to improve chip and cut resistance.

BRIEF DESCRIPTION OF DRAWINGS

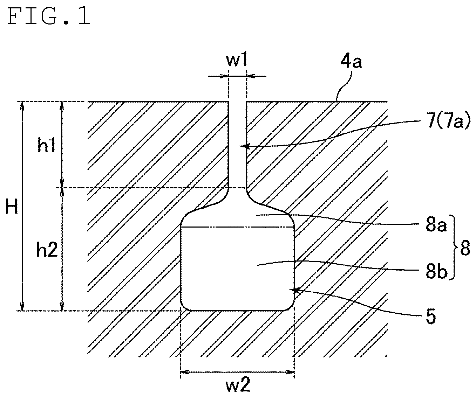

FIG. 1 is an exemplary cross-sectional view of a groove portion including an outer part on the tread face side and an inner part that is located inward from the outer part with respect to the radial direction of the tire and has a larger groove width than the outer part.

DESCRIPTION OF EMBODIMENTS

The present invention relates to a tire including a tread which contains a rubber component including an isoprene-based rubber and at least one styrene-butadiene rubber, and a filler including a carbon black. Further, the tire satisfies relationships (1) to (3) with respect to the amount of isoprene-based rubbers and the total styrene content each based on 100% by mass of the rubber components, and the amount of fillers per 100 parts by mass of the rubber components; and wherein the tire has a groove including an outer part on a tread face side and an inner part that is located inward from the outer part with respect to a radial direction of the tire and has a larger groove width than the outer part.

The reason why the tire provides the above-mentioned advantageous effect is believed to be as follows.

When Isoprene-based rubber content > 65% by mass, and 1.0% by mass ≤ Total styrene content ≤ 8.0% by mass, the impact may be easily cushioned by the styrene domain formed inside the rubber while the strength of the rubber is increased. At the same time, when the filler content is made higher than the total styrene content, the styrene domain and the interface between the rubber phases (NR/SBR) may also be reinforced to inhibit the formation of cracks between the polymer phases. Thus, it is considered that the impact inside the rubber will be cushioned and, further, the resistance to the formation of cracks is increased, thereby resulting in good chip and cut resistance.

Because of the above mechanism of action, it is believed that the present invention provides a tire with excellent chip and cut resistance.

Thus, the tire solves the problem (purpose) of providing a tire with excellent chip and cut resistance by being formulated to satisfy the relationship (1): Isoprene-based rubber content > 65% by mass, the relationship (2): 1.0% by mass ≤ Total styrene content ≤ 8.0% by mass, and the relationship (3): Filler content > Total styrene content. In other words, the formulation of relationships (1), (2), and (3) does not define the problem (purpose) and the problem herein is to provide a tire with excellent chip and cut resistance. In order to solve this problem, the tire has been formulated to satisfy the above parameters.

The tread in the tire includes a tread rubber composition containing one or more rubber components and one or more fillers.

The rubber components in the rubber composition contribute to crosslinking and generally correspond to polymer components which have a weight average molecular weight (Mw) of 10,000 or more and which are not extractable with acetone.

The weight average molecular weight of the rubber components is preferably 50,000 or more, more preferably 150,000 or more, still more preferably 200,000 or more, while it is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined with a gel permeation chromatograph (GPC) (GPC-8000 series available from Tosoh Corporation, detector: differential refractometer, column: TSKGEL SUPERMULTIPORE HZ-M available from Tosoh Corporation) relative to polystyrene standards.

The rubber composition satisfies the following relationship (2):

$$1.0\% \text{ by mass} \leq \text{Total styrene content} \leq 8.0\% \text{ by mass}$$

wherein Total styrene content represents the total styrene content (% by mass) based on 100% by mass of the rubber components.

The lower limit of the total styrene content is preferably 2.7% by mass or higher, more preferably 3.6% by mass or higher, still more preferably 4.5% by mass or higher, particularly preferably 5.4% by mass or higher. The upper limit of the styrene content is preferably 7.5% by mass or lower, more preferably 7.0% by mass or lower, still more preferably 6.5% by mass or lower, particularly preferably 6.0% by mass or lower. When the total styrene content is within the range indicated above, the advantageous effect tends to be better achieved.

Here, the total styrene content based on 100% by mass of the rubber components refers to the total amount (unit: % by mass) of the styrene portion contained in the total rubber components, and can be calculated by Σ[(Amount of each rubber component) × (Styrene content of the each rubber component)/100]. For example, when 100% by mass of rubber components include 85% by mass of a SBR having a styrene content of 40% by mass, 5% by mass of a SBR having a styrene content of 25% by mass, and 10% by mass of a BR having a styrene content of 0% by mass, the total styrene content of the rubber components is 35.25% by mass (= 85 × 40/100 + 5 × 25/100 + 10 × 0/100).

The total vinyl content based on 100% by mass of the rubber components is preferably 2.5% by mass or higher, more preferably 4.0% by mass or higher, still more preferably 4.5% by mass or higher, while it is preferably 15.0% by mass or lower, more preferably 11.0% by mass or lower, still more preferably 9.0% by mass or lower. When the total vinyl content is within the range indicated above, the advantageous effect tends to be better achieved.

Here, the total vinyl content of the rubber components refers to the total vinyl bond content (unit: parts by mass) of the butadiene portion of the SBR and BR included in the rubber components, where the total mass of the rubber components is taken as 100, and can be calculated by $\Sigma$[(Amount of each rubber component) $\times$ (Percentage [% by mass] of vinyl bond content of butadiene portion of the each rubber component based on total mass of the each rubber component)]. For example, when 100 parts by mass of rubber components include 85 parts by mass of a SBR having a styrene content of 40% by mass and a vinyl content of 30% by mass, 5 parts by mass of a SBR having a styrene content of 20% by mass and a vinyl content of 20% by mass, and 10 parts by mass of a BR having a vinyl content of 10% by mass, the total vinyl content of the rubber components is 17.1 parts by mass (= 85 $\times$ (100 [% by mass] - 40 [% by mass]) $\times$ 30 [% by mass] + 5 $\times$ (100 [% by mass] - 20 [% by mass]) $\times$ 20 [% by mass] + 10 $\times$ 10 [% by mass]).

Here, the styrene and vinyl contents based on 100% by mass of each rubber component can be measured by nuclear magnetic resonance (NMR).

Moreover, although the total styrene and total vinyl contents based on 100% by mass of the rubber components are calculated according to the above-mentioned equations in EXAMPLES herein, the total contents may be analyzed from the tire, e.g., using a pyrolysis gas chromatography/mass spectrometry (Py-GC/MS) system or the like.

The rubber composition contains several rubber components including an isoprene-based rubber and a styrene butadiene rubber.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, and examples include those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

The rubber composition satisfies the following relationship (1):

$$\texttt{Isoprene-based rubber content > 65\% by mass}$$

wherein Isoprene-based rubber content represents the amount (% by mass) of isoprene-based rubbers based on 100% by mass of the rubber components.

The amount of isoprene-based rubbers is preferably 67% by mass or more, more preferably 69% by mass or more, still more preferably 70% by mass or more. The upper limit is preferably 90% by mass or less, more preferably 85% by mass or less, still more preferably 80% by mass or less. When the amount is within the range indicated above, the advantageous effect tends to be better achieved.

Any rubber component other than isoprene-based rubbers and styrene-butadiene rubbers may be used, including those known in the tire field. Examples include diene rubbers such as polybutadiene rubbers (BR), acrylonitrile-butadiene rubbers (NBR), chloroprene rubbers (CR), butyl rubbers (IIR), and styrene-isoprene-butadiene copolymer rubbers (SIBR). Each of these rubbers may be used alone, or two or more of these may be used in combination. BR is preferred among these.

Non-limiting examples of the SBR include emulsionpolymerized styrene-butadiene rubbers (E-SBR) and solutionpolymerized styrene-butadiene rubbers (S-SBR). Examples of commercial products are available from Sumitomo Chemical Co., Ltd., JSR Corporation, Asahi Kasei Corporation, Zeon Corporation, etc.

The styrene content of the SBR is preferably 5% by mass or higher, more preferably 15% by mass or higher, still more preferably 18% by mass or higher, particularly preferably 20% by mass or higher, while it is preferably 40% by mass or lower, more preferably 35% by mass or lower, still more preferably 30% by mass or lower, particularly preferably 25% by mass or lower. When the styrene content is within the range indicated above, the advantageous effect tends to be better achieved.

The vinyl content of the SBR is preferably 20% by mass or higher, more preferably 24% by mass or higher, still more preferably 30% by mass or higher, while it is preferably 65% by mass or lower, more preferably 50% by mass or lower, still more preferably 45% by mass or lower, particularly preferably 42% by mass or lower. When the vinyl content is within the range indicated above, the advantageous effect tends to be better achieved.

Here, when the SBR is a single type of SBR, the above-described styrene content of the SBR refers to the styrene content of the single SBR, while when the SBR is multiple types of SBR, it refers to the average styrene content.

The average styrene content of the SBR can be calculated by {$\Sigma$(Amount of each SBR $\times$ Styrene content of the each SBR)}/Total amount of total SBR. For example, when 100% by mass of rubber components include 85% by mass of a SBR having a styrene content of 40% by mass and 5% by mass of a SBR having a styrene content of 25% by mass, the average styrene content of the SBR is 39.2% by mass (= (85 × 40 + 5 × 25)/(85 + 5)).

Moreover, the above-described vinyl content of the SBR refers to the vinyl bond content (unit: % by mass), where the total mass of the butadiene portion of the SBR is taken as 100. Here, vinyl content [% by mass] + cis content [% by mass] + trans content [% by mass] = 100 [% by mass]. When the SBR is a single type of SBR, the vinyl content of the SBR refers to the vinyl content of the single SBR, while when the SBR is multiple types of SBR, it refers to the average vinyl content.

The average vinyl content of the SBR can be calculated by Σ{Amount of each SBR × (100 [% by mass] - Styrene content [% by mass] of the each SBR) × Vinyl content [% by mass] of the each SBR}/Σ{Amount of the each SBR × (100 [% by mass] - Styrene content [% by mass] of the each SBR)}. For example, when 100 parts by mass of rubber components include 75 parts by mass of a SBR having a styrene content of 40% by mass and a vinyl content of 30% by mass, 15 parts by mass of a SBR having a styrene content of 25% by mass and a vinyl content of 20% by mass, and 10 parts by mass of the rest other than SBR, the average vinyl content of the SBR is 28% by mass (= {75 × (100 [% by mass] - 40 [% by mass]) × 30 [% by mass] + 15 × (100 [% by mass] - 25 [% by mass]) × 20 [% by mass]}/{75 × (100 [% by mass] - 40 [% by mass]) + 15 × (100 [% by mass] - 25 [% by mass])}).

The amount of SBR based on 100% by mass of the rubber components in the rubber composition is preferably 5% by mass or more, more preferably 15% by mass or more, still more preferably 20% by mass or more, while it is preferably 35% by mass or less, more preferably 32% by mass or less, still more preferably 30% by mass or less. When the amount is within the range indicated above, the advantageous effect tends to be better achieved.

The combined amount of isoprene-based rubbers and SBR based on 100% by mass of the rubber components in the rubber composition is preferably 70% by mass or more, more preferably 80% by mass or more, still more preferably 85% by mass or more, and may be 100% by mass. When the combined amount is within the range indicated above, the advantageous effect tends to be better achieved.

Any BR may be used, and examples include those commonly used in the tire industry, including: high-cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earthcatalyzed BR). Each of these rubbers may be used alone, or two or more of these may be used in combination.

The cis content of the BR is preferably 80% by mass or higher, more preferably 85% by mass or higher, still more preferably 90% by mass or higher, while it is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

Here, when the BR is a single type of BR, the above-described cis content of the BR refers to the cis content of the single BR, while when the BR is multiple types of BR, it refers to the average cis content.

The average cis content of the BR can be calculated by {Σ(Amount of each BR × Cis content of the each BR)}/Total amount of total BR. For example, when 100% by mass of rubber components include 20% by mass of a BR having a cis content of 90% by mass and 10% by mass of a BR having a cis content of 40% by mass, the average cis content of the BR is 73.3% by mass (= (20 × 90 + 10 × 40)/(20 + 10)).

The amount of BR based on 100% by mass of the rubber components in the rubber composition is preferably 5% by mass or more, more preferably 8% by mass or more, still more preferably 10% by mass or more, while it is preferably 20% by mass or less, more preferably 17% by mass or less, still more preferably 15% by mass or less. When the amount is within the range indicated above, the advantageous effect tends to be better achieved.

The rubber components may be oil extended rubbers obtained by extension with oils or resin extended rubbers obtained by extension with resins. These may be used alone or in combinations of two or more. Oil extended rubbers are preferred among these.

Here, the oils used in the oil extended rubbers and the resins used in the resin extended rubbers are as described later for plasticizers. Moreover, the oil content of the oil extended rubbers and the resin content of the resin extended rubbers are not limited, but these contents are each usually about 10 to 50 parts by mass per 100 parts by mass of the rubber solids content.

The rubber components may be modified to introduce therein a functional group interactive with a filler such as silica.

Examples of the functional group include a silicon-containing group (-SiR$_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, each of which may be substituted. Preferred among these is a silicon-containing group. More preferred is - SiR$_3$ where each R is the same or different and represents a hydrogen atom, a hydroxy group, a hydrocarbon group (preferably a C1-C6 hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition contains one or more fillers including carbon black.

The (total) amount of fillers per 100 parts by mass of the rubber components in the rubber composition is preferably 20 parts by mass or more, more preferably 40 parts by mass or more, still more preferably 50 parts by mass or more, further preferably 52 parts by mass or more, particularly preferably 55 parts by mass or more, while it is preferably 150 parts by mass or less, more preferably 100 parts by mass or less, still more preferably 80 parts by mass or less, particularly preferably 60 parts by mass or less. When the amount is within the range indicated above, the advantageous effect tends to be better achieved.

Non-limiting examples of the carbon black include N134, N110, N220, N234, N219, N339, N330, N326, N351, N550, and N762. The raw material of the carbon black may be a biomass material such as lignin or a plant oil. Moreover, the carbon black may be produced either by burning such as the furnace process or by hydrothermal carbonization (HTC). In addition to the carbon black produced by burning mineral oils, carbon black derived from lignin or recycled carbon obtained by burning and purifying tires or rubber products are also usable. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The average particle size of the carbon black is preferably 40 nm or less, more preferably 30 nm or less, still more preferably 22 nm or less, further preferably 20 nm or less, particularly preferably 18 nm or less. The lower limit is preferably 5 nm or more, more preferably 10 nm or more, still more preferably 12 nm or more. When the average particle size is within the range indicated above, the advantageous effect tends to be better achieved.

Particularly when a carbon black having an average particle size of 20 nm or less is used, the advantageous effect can be better achieved. The reason for such an advantageous effect is believed to be because the contact area between the polymer and the carbon black particles may be enhanced to improve the reinforcement of the rubber, resulting in improved chip and cut resistance.

Herein, the average particle size of the carbon black is determined by transmission electron microscopy (TEM). Specifically, the carbon black particles are photographed using a transmission electron microscope to measure the particle size which is the spherical diameter when the particle has a spherical shape, the minor axis when the particle has an acicular or rod shape, or the average particle diameter through the center when the particle has an amorphous shape. Then, the average of the particle sizes of 100 fine particles is defined as the average particle size.

The amount of carbon black per 100 parts by mass of the rubber components in the rubber composition is preferably 5 parts by mass or more, more preferably 15 parts by mass or more, still more preferably 30 parts by mass or more, particularly preferably 35 parts by mass or more, while it is preferably 80 parts by mass or less, more preferably 60 parts by mass or less, still more preferably 55 parts by mass or less, particularly preferably 52 parts by mass or less. When the amount is within the range indicated above, the advantageous effect tends to be better achieved.

To better achieve the advantageous effect, the percentage of carbon black based on 100% by mass of the fillers in the rubber composition is preferably 20% by mass or higher, more preferably 23% by mass or higher, still more preferably 25% by mass or higher, while it is preferably 70% by mass or lower, more preferably 60% by mass or lower, still more preferably 55% by mass or lower. When the percentage of carbon black is within the range indicated above, the advantageous effect tends to be better achieved.

Preferred examples of fillers other than carbon black that may be used in the rubber composition include inorganic fillers. In addition to the inorganic fillers, nanocelluloses such as cellulose nanofibers (CNF) and cellulose nanocrystals (CNC), short fiber materials such as carbon nanotubes, bio char, etc. are also usable.

The amount of inorganic fillers per 100 parts by mass of the rubber components in the rubber composition is preferably 20 parts by mass or more, more preferably 25 parts by mass or more, still more preferably 35 parts by mass or more, particularly preferably 40 parts by mass or more, while it is preferably 80 parts by mass or less, more preferably 60 parts by mass or less, still more preferably 55 parts by mass or less, particularly preferably 50 parts by mass or less. When the amount is within the range indicated above, the advantageous effect tends to be better achieved.

Examples of inorganic fillers include silica, clay, alumina, talc, calcium carbonate, magnesium carbonate, aluminum hydroxide, magnesium hydroxide, magnesium oxide, and titanium oxide. These may be used alone or in combinations of two or more. Silica is preferred among these.

Examples of silica include dry silica (anhydrous silica) and wet silica (hydrous silica). Wet silica is preferred because it contains a large number of silanol groups. The raw material of the silica may be water glass (sodium silicate) or a biomass material such as rice husks. Usable commercial products are available from Evonik-Degussa, Tosoh Silica Corporation, Solvay Japan, Tokuyama Corporation, etc. Each of these types of silica may be used alone, or two or more of these may be used in combination.

The nitrogen adsorption specific surface area ($N_2SA$) of the silica is preferably 50 $m^2$/g or more, more preferably 150 $m^2$/g or more, still more preferably 175 $m^2$/g or more, further preferably 200 $m^2$/g or more. The $N_2SA$ is also preferably 300 $m^2$/g or less, more preferably 250 $m^2$/g or less. When the $N_2SA$ is within the range indicated above, the advantageous effect tends to be better achieved.

Here, the $N_2SA$ of the silica can be measured in accordance with ASTM D3037-81.

The amount of silica per 100 parts by mass of the rubber components in the rubber composition is preferably 20 parts by mass or more, more preferably 25 parts by mass or more, still more preferably 35 parts by mass or more, particularly preferably 40 parts by mass or more, while it is preferably 80 parts by mass or less, more preferably 60 parts by mass or less, still more preferably 55 parts by mass or less, particularly preferably 50 parts by mass or less. When the amount is within the range indicated above, the advantageous effect tends to be better achieved.

The rubber composition may contain a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from, for example, Evonik Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica content in the rubber composition is preferably 3 parts by mass or more, more preferably 6 parts by mass or more, still more preferably 8 parts by mass or more, further preferably 10 parts by mass or more, while it is preferably 16 parts by mass or less, more preferably 14 parts by mass or less, still more preferably 12 parts by mass or less. When the amount is within the range indicated above, the advantageous effect tends to be better achieved.

The rubber composition may contain a plasticizer.

Here, the term "plasticizer" refers to a material that can impart plasticity to rubber components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber components is preferably 10 parts by mass or less, more preferably 5 parts by mass or less, still more preferably 3 parts by mass or less, particularly preferably 0 parts by mass. When the amount is within the range indicated above, the advantageous effect tends to be better achieved.

Any liquid plasticizer (any plasticizer which is liquid at room temperature (25°C)) may be used in the rubber composition, and examples include oils and liquid polymers (liquid resins, liquid diene polymers, liquid farnesene polymers, etc.). These may be used alone or in combinations of two or more.

The amount of liquid plasticizers per 100 parts by mass of the rubber components is preferably 10 parts by mass or less, more preferably 5 parts by mass or less, still more preferably 3 parts by mass or less, particularly preferably 0 parts by mass. When the amount is within the range indicated above, the advantageous effect tends to be better achieved.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Waste cooking oils and the like are also usable. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these.

Examples of liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenolic resins, olefin resins, polyurethane resins, and acrylic resins, all of which are liquid at 25°C. Hydrogenated products of these liquid resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesenebutadiene copolymers, all of which are liquid at 25°C. These polymers may be modified at the chain end or backbone with a polar group. Hydrogenated products of these polymers are also usable.

Examples of the resins (resins which are solid at room temperature (25°C)) usable in the rubber composition include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these.

The amount of the above-mentioned resins per 100 parts by mass of the rubber components is preferably 10 parts by mass or less, more preferably 5 parts by mass or less, still more preferably 3 parts by mass or less, particularly preferably 0 parts by mass. When the amount is within the range indicated above, the advantageous effect tends to be better achieved.

The softening point of the above-mentioned resins is preferably 50°C or higher, more preferably 55°C or higher, still more preferably 60°C or higher. The upper limit is preferably 160°C or lower, more preferably 150°C or lower, still more preferably 145°C or lower. When the softening point is within the range indicated above, better tire properties such as wet grip performance tend to be obtained. Here, the softening point of the resins is determined as set forth in JIS K 6220-1:2001 using a ring and ball softening point measuring apparatus and defined as the temperature at which the ball drops down.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins and hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Examples of the aromatic modified terpene resins include terpene-phenol resins made from terpene compounds and phenolic compounds, terpene-styrene resins made from terpene compounds and styrene compounds, and terpene-phenol-styrene resins made from terpene compounds, phenolic compounds, and styrene compounds. Here, examples of the terpene compounds include α-pinene and β-pinene; examples of the phenolic compounds include phenol and bisphenol A; and examples of the aromatic compounds include styrene compounds such as styrene and α-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

Examples of commercial plasticizers include those available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The rubber composition may contain an antioxidant.

Examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these antioxidants may be used alone, or two or more of these may be used in combination.

The amount of antioxidants per 100 parts by mass of the rubber components in the rubber composition is preferably 0.5 parts by mass or more, more preferably 0.8 parts by mass or more, still more preferably 1.0 parts by mass or more, while it is preferably 10.0 parts by mass or less, more preferably 6.0 parts by mass or less, still more preferably 4.0 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these waxes may be used alone, or two or more of these may be used in combination.

The amount of waxes per 100 parts by mass of the rubber components in the rubber composition is preferably 0.5 part by mass or more, more preferably 1.0 parts by mass or more, while it is preferably 10.0 parts by mass or less, more preferably 6.0 parts by mass or less. When the amount is within the range indicated above, the advantageous effect tends to be better achieved.

The rubber composition may contain stearic acid.

Conventionally known stearic acid may be used. Usable commercial products are available from NOF Corporation, Kao Corporation, FUJIFILM Wako Pure Chemical Corporation, Chiba Fatty Acid Co., Ltd., etc. Each of these types of stearic acid may be used alone, or two or more of these may be used in combination.

The amount of stearic acid per 100 parts by mass of the rubber components in the rubber composition is preferably 1.0 parts by mass or more, more preferably 2.0 parts by mass or more, still more preferably 3.0 parts by mass or more, while it is preferably 10.0 parts by mass or less, more preferably 6.0 parts by mass or less. When the amount is within the range indicated above, the advantageous effect tends to be better achieved.

The rubber composition may contain zinc oxide.

Conventionally known zinc oxide may be used. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these types of zinc oxide may be used alone, or two or more of these may be used in combination.

The amount of zinc oxide per 100 parts by mass of the rubber components in the rubber composition is preferably 1.0 parts by mass or more, more preferably 2.5 parts by mass or more, still more preferably 3.5 parts by mass or more, while it is preferably 10.0 parts by mass or less, more preferably 6.0 parts by mass or less. When the amount is within the range indicated above, the advantageous effect tends to be better achieved.

The rubber composition may contain sulfur.

Examples of sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber components in the rubber composition is preferably 0.5 parts by mass or more, more preferably 1.0 parts by mass or more, still more preferably 1.5 parts by mass or more, while it is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber components in the rubber composition is preferably 0.5 parts by mass or more, more preferably 1.0 parts by mass or more, still more preferably 1.5 parts by mass or more, while it is preferably 10.0 parts by mass or less, more preferably 8.0 parts by mass or less, still more preferably 7.0 parts by mass or less. When the amount is within the range indicated above, the advantageous effect tends to be better achieved.

In addition to the above-mentioned components, the rubber composition may further contain additives commonly used in the tire industry, such as organic peroxides. The amounts of these additives are each preferably 0.1 to 200 parts by mass per 100 parts by mass of the rubber components.

The rubber composition satisfies the following relationship (3):

$$\texttt{Filler content > Total styrene content}$$

wherein Total styrene content represents the total styrene content (% by mass) based on 100% by mass of the rubber components, and Filler content represents the amount (parts by mass) of fillers per 100 parts by mass of the rubber components.

The lower limit of the ratio of Filler content/Total styrene content is preferably 7.3 or higher, more preferably 9.3 or higher, still more preferably 9.6 or higher, further preferably 10.0 or higher, particularly preferably 10.2 or higher. The upper limit of the ratio of Filler content/Total styrene content is preferably 25.0 or lower, more preferably 20.4 or lower, still more preferably 15.3 or lower, particularly preferably 11.1 or lower. When the ratio is within the range indicated above, the advantageous effect tends to be better achieved.

To better achieve the advantageous effect, the rubber composition desirably satisfies the following relationship: Carbon black content > Total styrene content wherein Total styrene content represents the total styrene content (% by mass) based on 100% by mass of the rubber components, and Carbon black content represents the amount (parts by mass) of carbon black per 100 parts by mass of the rubber components.

The reason for such an advantageous effect is believed to be because carbon black may be dispersed around the styrene so that the styrene domain and the interface between the rubber phases (NR/SBR) can also be reinforced to inhibit the formation of cracks between the polymer phases, resulting in improved chip and cut resistance.

In the rubber composition, the ratio of Carbon black content/Total styrene content is preferably 2.8 or higher, more preferably 4.0 or higher, still more preferably 5.6 or higher, particularly preferably 6.5 or higher. The upper limit is preferably 13.0 or lower, more preferably 11.1 or lower, still more preferably 9.6 or lower, particularly preferably 8.3 or lower. When the ratio is within the range indicated above, the advantageous effect tends to be better achieved.

To better achieve the advantageous effect, the rubber composition desirably satisfies the following relationship:

$$\texttt{Silica content > Total styrene content}$$

wherein Total styrene content represents the total styrene content (% by mass) based on 100% by mass of the rubber components, and Silica content represents the amount (parts by mass) of silica per 100 parts by mass of the rubber components.

The reason for such an advantageous effect is believed to be because silica may be dispersed around the styrene so that the styrene domain and the interface between the rubber phases (NR/SBR) can also be reinforced to inhibit the formation of cracks between the polymer phases, resulting in improved chip and cut resistance.

In the rubber composition, the ratio of Silica content/Total styrene content is preferably 2.0 or higher, more preferably 3.3 or higher, still more preferably 3.7 or higher, particularly preferably 4.6 or higher. The upper limit is preferably 10.0 or lower, more preferably 9.3 or lower, still more preferably 8.0 or lower, further preferably 7.4 or lower, further preferably 6.9 or lower. When the ratio is within the range indicated above, the advantageous effect tends to be better achieved.

To better achieve the advantageous effect, desirably, the rubber composition contains silica and satisfies the following relationship:

Silica content (the amount of silica per 100 parts by mass of the rubber components) > Carbon black content (the amount of carbon black per 100 parts by mass of the rubber components).

The reason for such an advantageous effect is believed to be because when the silica content is made higher than the carbon black content, flexibility (enhanced elongation) may be provided to the rubber, resulting in improved chip and cut resistance.

In the rubber composition, the ratio of Silica content/Carbon black content is preferably 0.6 or higher, more preferably 0.65 or higher, still more preferably 0.7 or higher, further preferably 0.8 or higher, further preferably 2.5 or higher, particularly preferably 2.7 or higher. The upper limit is preferably 15.0 or lower, more preferably 10.0 or lower, still more preferably 5.0 or lower, particularly preferably 4.0 or lower. When the ratio is within the range indicated above, the advantageous effect tends to be better achieved.

To better achieve the advantageous effect, the rubber composition desirably satisfies the following relationship:

$$150 \leq \text{Isoprene-based rubber content} \times \text{Total styrene content} \leq 550$$

wherein Isoprene-based rubber content represents the amount (% by mass) of isoprene-based rubbers based on 100% by mass of the rubber components, and Total styrene content represents the total styrene content (% by mass) based on 100% by mass of the rubber components.

The reason for such an advantageous effect is believed to be because when the product of Isoprene-based rubber content × Total styrene content is adjusted within a predetermined range, the impact may be easily cushioned by the styrene domain formed inside the rubber while the strength of the rubber is increased, with the result that the impact inside the rubber will be cushioned and good chip and cut resistance can be provided.

The lower limit of the product of Isoprene-based rubber content × Total styrene content is preferably 189 or more, more preferably 288 or more, still more preferably 300 or more, particularly preferably 350 or more, most preferably 378 or more. The upper limit is preferably 525 or less, more preferably 500 or less, still more preferably 420 or less, particularly preferably 400 or less. When the product is within the range indicated above, the advantageous effect tends to be better achieved.

For example, the rubber composition may be prepared by kneading the above-mentioned components in a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 115°C, more preferably 85 to 110°C. Then, the composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 30 minutes, preferably 5 to 15 minutes.

The rubber composition is used in a tread, in particular, a portion (cap tread) that will contact the road surface during driving.

The tire of the present invention can be produced from the above-described rubber composition by usual methods.

Specifically, the rubber composition before vulcanization may be extruded into the shape of a tread and then formed together with other tire components in a usual manner on a tire building machine to build an unvulcanized tire. The unvulcanized tire may be heated and pressurized in a vulcanizer to produce a tire.

To better achieve the advantageous effect, the tire has a groove portion including an outer part on the tread face side and an inner part that is located inward from the outer part with respect to the radial direction of the tire and has a larger groove width than the outer part (such a groove portion may also be referred to as "flask groove").

The reason for such an advantageous effect is believed to be because when such a groove portion having a larger groove width on the inside than on the tread face side is provided, the rubber may easily deform to release external input, thus providing high chip resistance.

Herein, the term "groove portion" conceptually includes both a groove forming a recess that has a portion with a maximum width of 1.5 mm or more when the full range of its depth is considered, and a sipe forming a slit that has a maximum width of less than 1.5 mm when the full range of it depth is considered.

FIG. 1 is an exemplary cross-sectional view (exemplary transverse section) of a groove portion (flask groove) including an outer part on the tread face side and an inner part that is located inward from the outer part with respect to the radial direction of the tire and has a larger groove width than the outer part.

A groove (groove portion) 5 includes a first part 7 located on the tread face 4a side of a tread portion (an outer part on the tread face side) and a second part 8 provided inward from the first part 7 with respect to the radial direction of the tire and having a larger width than the first part 7 (an inner part that is located inward from the outer part with respect to the radial direction of the tire and has a larger groove width than the outer part). In this embodiment, the groove 5 forms a flask shape with the first part 7 and the second part 8.

During the period from when the tread portion is new to the initial stage of wear, it is considered that the groove 5 in this embodiment may have the first part 7 exposed to the tread face 4a and have a relatively large cavity inside to partially reduce the rigidity of the tread portion, so that external input can be easily cushioned due to its deformation, resulting in improved chip and cut resistance. From such a standpoint, the first part 7 is preferably provided with a width w1 of less than 1.5 mm, more preferably 0.6 to 1.2 mm. Moreover, in the final stage of wear of the tread portion, as the second part 8 is exposed to the tread face 4a to provide an appropriate cavity inside, it can function as a groove having a relatively large width to maintain high drainage performance. From such a standpoint, the second part 8 is preferably provided with a width w2 (maximum width) of 1.5 mm or more, more preferably 3 to 7 mm.

To prevent rubber chipping and for other reasons, the width (maximum width) w2 of the second part 8 is desirably 3.8 to 6.7 times the width w1 of the first part 7.

The second part 8 desirably has a ratio of the depth h2 of the second part 8 to the width w2 of the second part 8 (h2/w2) of 70 to 120%.

In this embodiment, the first part 7 is provided to include a first equal width portion 7a in which the first part 7 has an equal width w1 along the tire radial direction. Such a first equal width portion 7a may reduce a decrease in the pattern rigidity of the tread portion to maintain high handling stability.

To better achieve the advantageous effect, the groove depth h1 of the first part 7 is preferably 0.30 to 0.56 times, more preferably 0.40 to 0.56 times the groove depth H of the groove 5.

The second part 8 in this embodiment includes a second gradually-increasing portion 8a in which the width w2 gradually increases radially inwardly (with respect to the tire), and a second equal width portion 8b in which an equal width w2 (maximum width) continues in the radial direction of the tire. Thus, the second part 8 in this embodiment is provided in a hexagonal shape tapered toward the upper side.

Here, the second part 8 is not limited to such an embodiment and may be in various shapes in the transverse section, such as a circular shape, a barrel shape, a sandglass shape in which the width w2 gradually increases radially outwardly and inwardly (with respect to the tire), or a triangular shape in which the groove width gradually increases radially inwardly (with respect to the tire).

For example, the groove depth H of the groove 5 is desirably about 6.0 to 6.6 mm.

To better achieve the advantageous effect, the tire desirably satisfies the following relationship:

$$Y \geq 3.7 - 0.29X$$

wherein X represents the total styrene content (% by mass) based on 100% by mass of the rubber components in the rubber composition, and Y represents the groove width (mm, w2 in FIG. 1) of the inner part of the groove portion including an outer part on the tread face side and an inner part that is located inward from the outer part with respect to the radial direction of the tire and has a larger groove width than the outer part.

The reason for such an advantageous effect is believed to be because, although a decrease in the total styrene content of the rubber components can result in a decrease in chip and cut resistance, increasing the groove width (Y) of the inner part may provide flexibility to the tread to allow the rubber to easily deform, resulting in good cut resistance.

The value of Y + 0.29X is preferably 3.0 or more, more preferably 3.6 or more, still more preferably 4.5 or more, particularly preferably 5.1 or more. The upper limit is preferably 7.0 or less, more preferably 6.0 or less, still more preferably 5.7 or less, particularly preferably 5.5 or less. When the value is within the range indicated above, the advantageous effect tends to be better achieved.

The Y (the groove width of the inner part) is preferably 2.0 mm or more, more preferably 2.5 mm or more, still more preferably 3.0 mm or more, particularly preferably 3.5 mm or more. The upper limit is preferably 7.0 mm or less, more preferably 5.0 mm or less, still more preferably 4.5 mm or less, particularly preferably 4.0 mm or less. When the Y is within the range indicated above, the advantageous effect tends to be better achieved.

For example, the tire can be used as various tires, such as a pneumatic tire or a non-pneumatic tire which is not filled with pressurized air.

The tire may be used as a tire for passenger vehicles, large passenger vehicles, large SUVs, heavy duty vehicles such as trucks and buses, or light trucks. Moreover, the tire may be used as a winter tire or a studless winter tire for those vehicles.

The tire is suitable as a heavy duty tire, among others.

It should be noted that the term "heavy duty tire" refers to a tire having a maximum load capacity of 1400 kg or higher. Here, the term "maximum load capacity" refers to a maximum load capacity specified for each tire by the standard in a standard system including standards according to which tires are provided, and may be, for example, the maximum load capacity based on the load index (LI) in the Japan Automobile Tyre Manufacturers Association standard (JATMA standard), the maximum value shown in Table "TIRE LOAD LIMITS AT VARIOUS COLD INFLATION PRESSURES" in TRA, or the "load capacity" in ETRTO. Moreover, JATMA, ETRTO, and TRA will be referenced in that order, and if the referenced standard includes an applicable size, it will be followed.

EXAMPLES

Examples (working examples) which are considered preferable to implement the invention are described below although the scope of the present invention is not limited to the examples.

Tires prepared from compositions varied as shown in Table 1 using the chemicals listed below were simulated, and the results calculated according to the below-described evaluation are shown in Table 1.

(Rubber components)

NR: TSR20
SBR 1: Production Example 1 below (styrene content: 18% by mass)
SBR 2: Europrene SOL R C2525 available from Versalis (styrene content: 25% by mass, vinyl content: 24% by mass)
BR: BR150B available from Ube Industries, Ltd. (vinyl content: 1% by mass, cis content: 97% by mass)

(Chemicals other than rubber components)

Carbon black 1: N220 (average particle size: 22 nm)
Carbon black 2: N134 (average particle size: 18 nm)
Silica: Ultrasil VN3 available from Evonik-Degussa ($N_2SA$: 175 $m^2$/g)
Silane coupling agent: Si266 available from Evonik-Degussa (bis(3-triethoxysilylpropyl)disulfide)
Wax: Ozoace 0355 available from Nippon Seiro Co., Ltd.
Antioxidant: NOCRAC 6C available from Ouchi Shinko Chemical Industrial Co., Ltd. (N-(1,3-dimethylbutyl)-N'-phenyl-p-phenylenediamine)
Stearic acid: stearic acid "TSUBAKI" available from NOF Corporation
Zinc oxide: zinc oxide #1 available from Mitsui Mining & Smelting Co., Ltd.
Sulfur: HK-200-5 available from Hosoi Chemical Industry Co., Ltd. (5% by mass oil-containing powdered sulfur)
Vulcanization accelerator: NOCCELER CZ available from Ouchi Shinko Chemical Industrial Co., Ltd. (N-cyclohexyl-2-benzothiazolylsulfenamide)

(Production Example 1)

A nitrogen-purged autoclave reactor is charged with cyclohexane, tetrahydrofuran, styrene, and 1,3-butadiene. After the temperature of the contents of the reactor is adjusted to 20°C, n-butyllithium is added to initiate polymerization. The polymerization is carried out under adiabatic conditions, and the maximum temperature reaches 85°C. Once the polymerization conversion ratio reaches 99%, butadiene is further added, and polymerization is carried out for additional five minutes. Subsequently, 3-dimethylaminopropyltrimethoxysilane is added as a modifier, followed by reaction for 15 minutes. After completion of the polymerization reaction, 2,6-di-tert-butyl-p-cresol is added. Then, the solvent is removed by steam stripping, and the product is dried on hot rolls adjusted at 110°C, thereby obtaining a modified SBR.

(Examples and Comparative Examples)

According to the formulation recipe in Table 1, the materials other than the sulfur and vulcanization accelerator are kneaded in a 1.7 L Banbury mixer (Kobe Steel, Ltd.) at 150°C for five minutes to obtain a kneaded mixture.
Next, the kneaded mixture is kneaded with the sulfur and vulcanization accelerator using an open roll mill at 80°C for five minutes to obtain an unvulcanized rubber composition.
The unvulcanized rubber composition is formed into the shape of a tread and assembled with other tire components to build an unvulcanized tire. The unvulcanized tire is press-vulcanized at 150°C for 30 minutes to prepare a test tire (heavy duty tire, size: 11R22.5).

<Chip and cut resistance>

The test tires are mounted on the front and rear wheels of a truck, and the truck is driven on a graveled course. The external appearance (occurrence of chipping) of the tire tread surface is visually observed after 100 km of driving. The results are expressed as an index relative to that of Comparative Example 2 taken as 100. A higher index indicates better chip and cut resistance.

[Table 1]

| Formulation (parts by mass) | Example 1 | 2 | 3 | 4 | 5 | 6 | 7 | 8 | 9 | 10 | 11 | 12 | 13 | Comparative Example 1 | 2 | 3 | 4 | 5 |
|---|---|---|---|---|---|---|---|---|---|---|---|---|---|---|---|---|---|---|
| NR | 70 | 80 | 70 | 70 | 70 | 70 | 70 | 70 | 70 | 70 | 70 | 70 | 70 | 70 | 100 | 50 | 60 | 60 |
| SBR 1 | 30 | 20 | 15 | | 30 | 30 | 30 | 30 | 30 | 30 | 30 | 30 | 30 | | | | 20 | |
| SBR 2 | | | | 30 | | | | | | | | | | | | 50 | 20 | |
| BR | | | 15 | | | | | | | | | | | 30 | | | 20 | 40 |
| Carbon black 1 | 30 | 30 | 30 | 30 | 26 | 35 | 35 | 5 | 15 | | 30 | 35 | 30 | 30 | 30 | 10 | 10 | 50 |
| Carbon black 2 | | | | | 26 | | | | | 30 | | | | | | | | |
| Silica | 25 | 25 | 25 | 25 | | 20 | 20 | 50 | 40 | 25 | 20 | 25 | 25 | 25 | 25 | | | |
| Silane coupling agent | 2.5 | 2.5 | 2.5 | 2.5 | | 2 | 2 | 5 | 4 | 2.5 | 2.0 | 2.5 | 2.5 | 2.5 | 2.5 | | | |
| Wax | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Antioxidant | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Stearic acid | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| Zinc oxide | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 |
| Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Total styrene content (% by mass) | 5.4 | 3.6 | 2.7 | 7.5 | 5.4 | 5.4 | 5.4 | 5.4 | 5.4 | 5.4 | 5.4 | 5.4 | 5.4 | 0.0 | 0.0 | 12.5 | 8.6 | 0.0 |
| Filler content (parts by mass) | 55 | 55 | 55 | 55 | 52 | 55 | 55 | 55 | 55 | 55 | 50 | 60 | 55 | 55 | 55 | 10 | 10 | 50 |
| Carbon black content (parts by mass) | 30 | 30 | 30 | 30 | 52 | 35 | 35 | 5 | 15 | 30 | 30 | 35 | 30 | 30 | 30 | 10 | 10 | 50 |
| Filler content/Total styrene content | 10.2 | 15.3 | 20.4 | 7.3 | 9.6 | 10.2 | 10.2 | 10.2 | 10.2 | 10.2 | 9.3 | 11.1 | 10.2 | | | 0.8 | 1.2 | |
| Carbon black content/Total styrene content | 5.6 | 8.3 | 11.1 | 4.0 | 9.6 | 6.5 | 6.5 | 0.9 | 2.8 | 5.6 | 5.6 | 6.5 | 5.6 | | | 0.8 | 1.2 | |
| Silica content/Total styrene content | 4.6 | 6.9 | 9.3 | 3.3 | 0.0 | 3.7 | 3.7 | 9.3 | 7.4 | 4.6 | 3.7 | 4.6 | 4.6 | | | 0.0 | 0.0 | |

(continued)

| | Example | | | | | | | | | | | | | Comparative Example | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 1 | 2 | 3 | 4 | 5 |
| Silica content/Carbon black content | 0.8 | 0.8 | 0.8 | 0.8 | 0.0 | 0.6 | 0.6 | 10.0 | 2.7 | 0.8 | 0.7 | 0.7 | 0.8 | 0.8 | 0.8 | 0.0 | 0.0 | 0.0 |
| Flask groove | No | No | No | No | No | Yes | Yes | No | No | No | No | No | Yes | No | No | No | No | No |
| Y (mm) | | | | | | 3.5 | 2.0 | | | | | | 3.5 | | | | | |
| 3.7 - 0.29X | 2.1 | 2.7 | 2.9 | 1.5 | 2.1 | 2.1 | 2.1 | 2.1 | 2.1 | 2.1 | 2.1 | 2.1 | 2.1 | 3.7 | 3.7 | 0.1 | 1.2 | 3.7 |
| Y + 0.29X | | | | | | 5.1 | 3.6 | | | | | | 5.1 | | | | | |
| Isoprene-based rubber content $\times$ Total styrene content | 378 | 288 | 189 | 525 | 378 | 378 | 378 | 378 | 378 | 378 | 378 | 378 | 378 | 0 | 0 | 625 | 516 | 0 |
| Evaluation — Chip and cut resistance | 120 | 114 | 111 | 130 | 124 | 139 | 130 | 112 | 137 | 133 | 112 | 129 | 135 | 96 | 100 | 24 | 30 | 98 |

REFERENCE SIGNS LIST

4a tread face of tread portion
5 groove (groove portion)
7 first part (outer part on tread face side)
7a first equal width portion
8 second part (inner part that is located inward from outer part with respect to radial direction of tire and has larger groove width than outer part)
8a second gradually-increasing portion
8b second equal width portion
w1 width of first part 7
w2 width of second part 8
h1 groove depth of first part 7
h2 groove depth of second part 8
H groove depth of groove 5

Provided is a tire with excellent chip and cut resistance. Included is a tire including a tread, the tread containing at least one rubber component including at least one isoprene-based rubber and at least one styrene-butadiene rubber, and at least one filler including at least one carbon black, the tire satisfying the following **relationships:** (1) Isoprene-based rubber content > 65% by mass; (2) 1.0% by mass ≤ Total styrene content ≤ 8.0% by mass; and (3) Filler content > Total styrene content, wherein Isoprene-based rubber content and Total styrene content represent an amount (% by mass) of the isoprene-based rubber and a total styrene content (% by mass), respectively, based on 100% by mass of the rubber component, and Filler content represents an amount (parts by mass) of the filler per 100 parts by mass of the rubber component; and
wherein the tire has a groove including an outer part on a tread face side and an inner part that is located inward from the outer part with respect to a radial direction of the tire and has a larger groove width than the outer part.

**Claims**

1. A tire, comprising a tread,

    the tread comprising: at least one rubber component including at least one isoprene-based rubber and at least one styrene-butadiene rubber; and at least one filler including at least one carbon black,
    the tire satisfying the following relationships (1) to (3):

        (1) Isoprene-based rubber content > 65% by mass;
        (2) 1.0% by mass ≤ Total styrene content ≤ 8.0% by mass; and
        (3) Filler content > Total styrene content

    wherein Isoprene-based rubber content and Total styrene content represent an amount (% by mass) of the isoprene-based rubber and a total styrene content (% by mass), respectively, based on 100% by mass of the rubber component, and Filler content represents an amount (parts by mass) of the filler per 100 parts by mass of the rubber component; and
    wherein the tire has a groove including an outer part on a tread face side and an inner part that is located inward from the outer part with respect to a radial direction of the tire and has a larger groove width than the outer part.

2. The tire according to claim 1,
    wherein the tire satisfies the following relationship:

$$Y \geq 3.7 - 0.29X$$

    wherein X represents the total styrene content (% by mass) based on 100% by mass of the rubber component, and Y represents the groove width (mm) of the inner part.

3. The tire according to any one of claims 1 or 2,
   wherein the tire satisfies the following relationship:

$$\text{Carbon black content} > \text{Total styrene content}$$

wherein Total styrene content represents the total styrene content (% by mass) based on 100% by mass of the rubber component, and Carbon black content represents an amount (parts by mass) of the carbon black per 100 parts by mass of the rubber component.

4. The tire according to any one of claims 1 to 3,
   wherein the tread comprises at least one silica and satisfies the following relationship: Silica content > Carbon black content.

5. The tire according to any one of claims 1 to 4,
   wherein the carbon black includes a carbon black having an average particle size of 20 nm or less.

6. The tire according to claim 4 or 5,
   wherein the tire satisfies the following relationship:

$$\text{Silica content} > \text{Total styrene content}$$

wherein Total styrene content represents the total styrene content (% by mass) based on 100% by mass of the rubber component, and Silica content represents an amount (parts by mass) of the silica per 100 parts by mass of the rubber component.

7. The tire according to any one of claims 1 to 6,
   wherein the tire satisfies the following relationship:

$$300 \leq \text{Isoprene-based rubber content} \times \text{Total styrene content} \leq 420$$

wherein Isoprene-based rubber content represents the amount (% by mass) of the isoprene-based rubber based on 100% by mass of the rubber component, and Total styrene content represents the total styrene content (% by mass) based on 100% by mass of the rubber component.

**Patentansprüche**

1. Reifen, umfassend eine Lauffläche,

   wobei die Lauffläche umfasst: mindestens eine Kautschukkomponente, die mindestens einen isoprenbasierten Kautschuk und mindestens einen Styrol-Butadien-Kautschuk beinhaltet; und mindestens einen Füllstoff, der mindestens einen Ruß beinhaltet,
   wobei der Reifen die folgenden Beziehungen (1) bis (3) erfüllt:

   (1) isoprenbasierter Kautschukgehalt > 65 Masse-%;
   (2) 1,0 Masse-% $\leq$ Gesamtstyrolgehalt $\leq$ 8,0 Masse-%; und
   (3) Füllstoffgehalt > Gesamtstyrolgehalt

   wobei isoprenbasierter Kautschukgehalt und Gesamtstyrolgehalt jeweils eine Menge (Masse-%) des isoprenbasierten Kautschuks und einen Gesamtstyrolgehalt (Masse-%) basierend auf 100 Masse-% der Kautschukkomponente darstellen, und Füllstoffgehalt eine Menge (Masseteile) des Füllstoffs pro 100 Masseteilen der Kautschukkomponente darstellt; und
   wobei der Reifen eine Rille aufweist, die einen äußeren Teil auf einer Laufflächenoberseite und einen inneren Teil beinhaltet, der sich weiter innen als der äußere Teil in Bezug auf eine Radialrichtung des Reifens befindet und eine größere Rillenbreite als der äußere Teil aufweist.

**2.** Reifen nach Anspruch 1,
wobei der Reifen die folgende Beziehung erfüllt:

$$Y \geq 3{,}7 - 0{,}29X$$

wobei X den Gesamtstyrolgehalt (Masse-%) basierend auf 100 Masse-% der Kautschukkomponente darstellt und Y die Rillenbreite (mm) des inneren Teils darstellt.

**3.** Reifen nach einem der Ansprüche 1 oder 2,
wobei der Reifen die folgende Beziehung erfüllt:

$$\text{Rußgehalt} > \text{Gesamtstyrolgehalt}$$

wobei Gesamtstyrolgehalt den Gesamtstyrolgehalt (Masse-%) basierend auf 100 Masse-% der Kautschukkomponente darstellt und Rußgehalt eine Menge (Masseteile) des Rußes pro 100 Masseteile der Kautschukkomponente darstellt.

**4.** Reifen nach einem der Ansprüche 1 bis 3,
wobei die Lauffläche mindestens ein Silica umfasst und die folgende Beziehung erfüllt: Silicagehalt > Rußgehalt.

**5.** Reifen nach einem der Ansprüche 1 bis 4,
wobei der Ruß einen Ruß beinhaltet, der eine durchschnittliche Teilchengröße von 20 nm oder weniger aufweist.

**6.** Reifen nach Anspruch 4 oder 5,
wobei der Reifen die folgende Beziehung erfüllt:

$$\text{Silicagehalt} > \text{Gesamtstyrolgehalt}$$

wobei der Gesamtstyrolgehalt den Gesamtstyrolgehalt (Masse-%) basierend auf 100 Masse-% der Kautschukkomponente darstellt und der Silicagehalt eine Menge (Masseteile) der Silica pro 100 Masseteile der Kautschukkomponente darstellt.

**7.** Reifen nach einem der Ansprüche 1 bis 6,
wobei der Reifen die folgende Beziehung erfüllt:

$$300 \leq \text{isoprenbasierter Kautschukgehalt} \times \text{Gesamtstyrolgehalt} \leq 420$$

wobei der isoprenbasierte Kautschukgehalt die Menge (Masse-%) des isoprenbasierten Kautschuks basierend auf 100 Masse-% der Kautschukkomponente darstellt und Gesamtstyrolgehalt den Gesamtstyrolgehalt (Masse-%) basierend auf 100 Masse-% der Kautschukkomponente darstellt.

**Revendications**

**1.** Pneu, comprenant une bande de roulement,

la bande de roulement comprenant : au moins un composant caoutchouteux comportant au moins un caoutchouc à base d'isoprène et au moins un caoutchouc styrène-butadiène ; et au moins une charge comportant au moins du noir de carbone,
le pneu satisfaisant les relations (1) à (3) suivantes :

(1) teneur en caoutchouc à base d'isoprène > 65 % en masse ;
(2) 1,0 % en masse ≤ teneur totale en styrène ≤ 8,0 % en masse ; et

(3) teneur en charge > teneur totale en styrène,

la teneur en caoutchouc à base d'isoprène et la teneur totale en styrène représentant respectivement une quantité (% en masse) du caoutchouc à base d'isoprène et une teneur totale en styrène (% en masse), rapportées à 100 % en masse du composant caoutchouteux, et la teneur en charge représentant une quantité (parties en masse) de la charge pour 100 parties en masse du composant caoutchouteux ; et
le pneu ayant une rainure comportant une partie externe sur un côté face de bande de roulement et une partie interne qui se situe vers l'intérieur par rapport à la partie externe dans une direction radiale du pneu et a une plus grande largeur de rainure que la partie externe.

**2.** Pneu selon la revendication 1,

le pneu satisfaisant la relation suivante :

$$Y \geq 3{,}7 - 0{,}29X$$

où X représente la teneur totale en styrène (% en masse) rapportée à 100 % en masse du composant caoutchouteux, et Y représente la largeur de rainure (mm) de la partie interne.

**3.** Pneu selon l'une quelconque des revendications 1 et 2,
le pneu satisfaisant la relation suivante :

teneur en noir de carbone > teneur totale en styrène,
la teneur totale en styrène représentant la teneur totale en styrène (% en masse) rapportée à 100 % en masse du composant caoutchouteux, et la teneur en noir de carbone représentant une quantité (parties en masse) du noir de carbone pour 100 parties en masse du composant caoutchouteux.

**4.** Pneu selon l'une quelconque des revendications 1 à 3,
la bande de roulement comprenant au moins une silice et satisfaisant la relation suivante : teneur en silice > teneur en noir de carbone.

**5.** Pneu selon l'une quelconque des revendications 1 à 4,
le noir de carbone comportant du noir de carbone ayant une taille moyenne de particules de 20 nm ou moins.

**6.** Pneu selon la revendication 4 ou 5,
le pneu satisfaisant la relation suivante :

teneur en silice > teneur totale en styrène,
la teneur totale en styrène représentant la teneur totale en styrène (% en masse) rapportée à 100 % en masse du composant caoutchouteux, et la teneur en silice représentant une quantité (parties en masse) de silice pour 100 parties en masse du composant caoutchouteux.

**7.** Pneu selon l'une quelconque des revendications 1 à 6,

le pneu satisfaisant la relation suivante :

$$300 \leq \text{teneur en caoutchouc à base d'isoprène} \times \text{teneur totale en styrène} \leq 420,$$

la teneur en caoutchouc à base d'isoprène représentant la quantité (% en masse) du caoutchouc à base d'isoprène rapportée à 100 % en masse du composant caoutchouteux, et la teneur totale en styrène représentant la teneur totale en styrène (% en masse) rapportée à 100 % en masse du composant caoutchouteux.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3738998 A1

- EP 3795378 A1